Europäisches Patentamt

European Patent Office

Office européen des brevets

(11) Publication number: **0 476 660 B1**

# EUROPEAN PATENT SPECIFICATION

(45) Date of publication of patent specification: **20.12.95** (51) Int. Cl.[6]: **C08L 23/20**

(21) Application number: **91115960.6**

(22) Date of filing: **19.09.91**

---

(54) **Polybutene-1 resin composition**

---

(30) Priority: **21.09.90 JP 253568/90**

(43) Date of publication of application:
**25.03.92 Bulletin 92/13**

(45) Publication of the grant of the patent:
**20.12.95 Bulletin 95/51**

(84) Designated Contracting States:
**AT CH DE ES FR GB IT LI NL**

(56) References cited:
**EP-A- 0 171 976**
**EP-A- 0 218 332**
**EP-A- 0 250 076**

**WORLD PATENTS INDEX LATEST Week 8448,
Derwent Publications Ltd., London, GB; AN
84-296910**

(73) Proprietor: **MITSUI PETROCHEMICAL INDUS-
TRIES, LTD.
2-5, Kasumigaseki 3-chome
Chiyoda-ku
Tokyo (JP)**

(72) Inventor: **Tanaka, Haruhiko, c/o Mitsui
Petrochem. Ind. Ltd.
1-2, Waki 6-chome,
Waki-cho
Kuga-gun,
Yamaguchi-ken (JP)**
Inventor: **Kagawa, Fukashi, c/o Mitsui
Petrochem. Ind. Ltd.
1-2, Waki 6-chome,
Waki-cho
Kuga-gun,
Yamaguchi-ken (JP)**

(74) Representative: **Hansen, Bernd, Dr.
Dipl.-Chem. et al
Hoffmann, Eitle & Partner
Patent- und Rechtsanwälte,
Postfach 81 04 20
D-81904 München (DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Industrially Applicable Field

This invention relates to a polybutene-1 resin composition, and more detailedly to a polybutene-1 resin composition excellent in impact resistance, creep resistance and high speed moldability, a molding molded from the resin composition, and a process for preparing the molding.

Prior Art

Heretofore, piping materials made of a metal such as lead-plated steel pipes, copper pipes and lead pipes have been used as a piping material for water supply and hot water supply. However, there are problems, for example that there is a fear that in case of steel pipes red water or black water is generated due to rust, or in case of copper pipes pinholes and blue water are formed due to electrolytic corrosion, and piping materials free from such problems are sought. Thus, piping materials are already partly started to be used comprising a synthetic resin such as poly(vinyl chloride), polyethylene or polybutene-1 having no fear of the formation of rust or pinholes due to electrolytic corrosion.

Among these piping materials made of a synthetic resin, piping materials comprising a polybutene-1 resin are one of the most suitable piping materials as a piping material for water supply and hot water supply, since the polybutene-1 resin is excellent in pressure resistance, creep resistance at a high temperature, heat resistance and impact strength at a low temperature, abrasion resistance, and flexibility. Thus, it is expected in the future that demand for pipes comprising this polybutene-1 resin increases.

On the other hand, European Patent Publication 0172961A1 provides a polybutene-1 suitable as a material for pipes. This polybutene-1 contains 0 to 1 mole % of an olefin with 2 to 20 carbon atoms other than butene-1 and has

(1) an intrinsic viscosity $[\eta]$ of from 1.5 to 4.0 dl/g as measured in decalin at 135°C,

(2) a molecular weight distribution, expressed by the ratio of its weight average molecular weight $(\overline{M}w)$ to its number average molecular weight $(\overline{M}n)$, of not more than 6, and

(3) an isotacticity value of at least 95%.

EP-A-0 218 332 discloses a butene-1 polymer blend comprising undegraded high molecular weight butene-1 polymer and a chemically degraded, lower molecular weight butene-1 polymer. The lower molecular weight butene-1 polymer has a melt-flow rate of 150-250 g/10 min compared to the melt-flow rate of the higher molecular weight butene-1 which is 0.5-1.0 g/10 min.

EP-A-0 719 976 discloses a crystalline 1-butene polymer composition which comprises (a) a crystalline 1-butene polymer and (b) a radical-treated crystalline olefin polymer which can be derived from poly-1-butene. The components (a) and (b) can have different melt flow rates.

Problems to be solved by the Invention

However, although so far available polybutene-1 resins are excellent in rigidity, creep characteristics, impact resistant strength, crystallization speed and the like, they have a narrow molecular weight distribution such that the ratio $(\overline{M}w/\overline{M}n)$ of weight average molecular weight $(\overline{M}w)$ to number average molecular weight $(\overline{M}n)$ is 5 or less. Therefore, when such a resin is molded into a pipe having a diameter of 30 mm or less, it can sufficiently be molded at a low molding speed (3 m/min or less), but when it is molded into a pipe at a higher molding speed, rough surfaces arise on the inner and outer faces of the resulting pipe, one having good appearance cannot be obtained and thus there was a problem in high speed moldability.

Thus an object of this invention lies in providing a polybutene-1 resin composition which has characteristics possessed intrinsically by a polybutene-1 resin such as excellent rigidity, creep characteristics and impact resistant strength, and at the same time are excellent in moldability, particularly moldability at high molding speed, so-called high speed moldability.

Another object of this invention lies in providing a process for preparing a polybutene-1 resin molding having the above excellent characteristics.

Means for Solving the Problems

As a result of researches by the present inventors it was found that the above objects and advantages of this invention can be accomplished by a polybutene-1 resin composition substantially comprising

(A) 60 to 95 weight parts of a polybutene-1 resin (A) having

(i) a melt flow rate of 0.01 to 5 g/10 min,

(ii) the ratio ($\overline{Mw}/\overline{Mn}$) of weight average molecular weight ($\overline{Mw}$) to number average molecular weight ($\overline{Mn}$) of 6 or less, and

(iii) an isotactic value of 93% or more, and

(B) 40 to 5 weight parts of a polybutene-1 resin (B) having

(i) a 20 times or more as large melt flow rate as that of the polybutene-1 resin (A),

(ii) the ratio ($\overline{Mw}/\overline{Mn}$) of weight average molecular weight ($\overline{Mw}$) to number average molecular weight ($\overline{Mn}$) of 6 or less, and

(iii) an isotactic value of 93% or more

(hereinafter, the resin composition is sometimes abbreviated as "polybutene-1 resin composition-I").

According to this invention is also provided a polybutene-1 resin composition (hereinafter sometimes abbreviated as "polybutene-1 resin composition-II") substantially comprising

(1) 100 weight parts of the above polybutene-1 resin composition-I,

(2) 0.01 to 2 weight parts of a nucleating agent

and

(3) 0 to 20 weight parts of a thermoplastic polymer other than a polybutene-1 resin.

Further, according to this invention is provided a process for preparing a polybutene-1 resin molding which comprises melt-mixing

(a) 60 to 95 weight parts of the above polybutene-1 resin (A),

(b) 40 to 5 weight parts of the above polybutene-1 resin (B),

(c) 0.01 to 2 weight parts of a nucleating agent per 100 weight parts in total of the polybutene-1 resin (A) and the polybutene-1 resin (B), and

(d) 0 to 20 weight parts of a thermoplastic polymer other than a polybutene-1 resin per 100 weight parts in total of the polybutene-1 resin (A) and the polybutene-1 resin (B),

and molding the mixture into the molding.

The polybutene-1 resin composition of this invention is more detailedly described below.

The polybutene-1 resin (A), a main component of the resin composition of the invention, is a homopolymer of butene-1 or a copolymer of butene-1 with another $\alpha$-olefin having 2 to 20 carbon atoms. In case of the copolymer, the ratio of another $\alpha$-olefin to be copolymerized is 20 mole % or less, preferably 10 mole % or less and particularly preferably 5 mole % or less. Examples of another $\alpha$-olefin to be copolymerized include ethylene, propylene, hexene, 4-methylpentene-1, octene-1, decene-1, octadecene-1, etc.

The melt flow rate (MFR(E): ASTM D 1238, E) of the polybutene-1) resin (A) is 0.01 to 5 g/10 min, preferably 0.1 to 2 g/10 min, and the range gives good extrusion moldability of the resulting composition.

Further, in this polybutene-1 resin (A), the ratio ($\overline{Mw}/\overline{Mn}$) of weight average molecular weight ($\overline{Mw}$) to number average molecular weight ($\overline{Mn}$), representing molecular weight distribution, is 6 or less, and one having the ratio of 5 or less is preferred from the viewpoint that the resulting composition is excellent in impact resistance.

The weight average molecular weight ($\overline{Mw}$), the number average molecular weight ($\overline{Mn}$) and the ratio ($\overline{Mw}/\overline{Mn}$) are measured by the following method.

## Measurement of weight average molecular weight ($\overline{Mw}$) and number average molecular weight ($\overline{Mn}$)

(a) Using standard polystyrene having a known molecular weight (monodisperse polystyrene, produced by TOYO SODA MANUFACTURING CO., LTD.), polystyrenes having different molecular weight are subjected to GPC (gel permeation chromatography) analysis under the following measurement conditions:

| | |
|---|---|
| Apparatus: | Model 1 150 C, produced by water Co. |
| Column: | TSKGMH-6, 6 mm∅ x 600, produced by TOYO SODA MANUFACTURING CO., LTD. |
| Sample amount: | 400 $\mu$l |
| Temperature : | 135 °C |
| Flow rate : | 1 ml/min, and a calibration curve is made between molecular weight M and EV (elution volume) value. |

3

(b) Preparation of a sample

A polymer sample whose molecular weight it to be measured and a solvent o-dichlorobenzene are placed in a flask to prepare a solution containing the solvent in a rate of 20 ml per 15 mg of the polymer.

2,6-di-t-butyl-cresol is added as a stabilizer to the polymer solution so that the concentration becomes 0.1 % by weight.

The resulting solution is heated at 140 °C for 1 hour and then stirred for 1 hour to dissolve the polymer and the stabilizer completely.

Then, the solution is filtered at a temperature of 135 to 140 °C using a filter of 0.5 $\mu$m.

The filtrate is subjected to GPL analysis under the same measurement conditions as in the above (a), number average molecular weight

$$\overline{M}n = \Sigma MiNi / \Sigma Ni$$

and weight average molecular weight

$$\overline{M}w = \Sigma Mi^2Ni / \Sigma MiNi$$

are determined according to the above prepared calibration curve using the resulting EV value, and ($\overline{M}w/\overline{M}n$) is calculated.

Further, the isotactic value of this polybutene-1 resin (A) is 93 % or more, and is preferably 93 to 98 % from the viewpoint that the rigidity, heat resistance and creep resistance of the resulting composition are excellent.

Measurement of isotactic value (II)

This isotactic value (II) was measured according to the following method.

One gram of polybutene-1 resin was dissolved in 100 ml of n-decane, the solution was cooled to 0 °C and left at 0 °C for 24 hours to deposit the highly stereo-regular component, and the weight % of the insoluble part to the whole resin was designated an isotactic value II.

The polybutene-1 resin (B), another main component of the composition of this invention is, like the polybutene-1 resin (A), a homopolymer of butene-1, or a copolymer of butene-1 with another $\alpha$-olefin having 2 to 20 carbon atoms, and when this another $\alpha$-olefin having 2 to 20 carbon atoms is contained, its kind and content is the same as described in the polybutene-1 resin (A).

In order to give good extrusion moldability of the resulting composition, the melt flow rate (MFR(E): ASTM D 1238, E) of this polybutene-1 resin (B) is 20 times or more, preferably 50 to 1000 times, as large as the melt flow rate of the polybutene-1 resin (A).

Further, in this polybutene-1 resin (B), the ratio ($\overline{M}w/\overline{M}n$) of weight average molecular weight ($\overline{M}w$) to number average molecular weight ($\overline{M}n$), representing molecular weight distribution, is 6 or less, and one having the ratio of 5 or less is preferred from the viewpoint that the impact resistance of the resulting composition is excellent.

Further, the isotactic value (II) of this polybutene-1 resin (B) is 93 % or more, and preferably is 93 to 98 % from the viewpoint that the resulting composition is superior in rigidity, heat resistance and creep resistance.

In the resin composition of the invention, the melt tension of the molten parison of the obtained resin composition heightens and thus moldability and processability become good, and it becomes possible to mold the composition into a pipe at high speed. Further from the viewpoint that molded articles having good impact strength can be obtained, the compounding rate of the polybutene-1 resin (A)/polybutene-1 resin (B) is 60/40 to 95/5, preferably 90/10 to 70/30 by weight ratio.

Further, it is preferred for the resin composition of the invention to further contain a nucleating agent in addition to the polybutene-1 resins (A) and (B), since in that case the solidification speed of the molten resin extruded from the die at the time of pipe molding becomes faster and more stabilized high speed moldability is obtained, the speed of crystal transition peculiar to polybutene-1 resins is promoted even after the solidification and moreover there is an effect in the enhancement of the rigidity.

Examples of this nucleating agent are polyethylene resins, polyethylene waxes ethylenebisstearoamide, polypropylene resins, etc. Preferred as the nucleating agent is a polyolefin having a crystallization temperature higher than that of the polybutene-1 resins (A) or (B).

When the nucleating agent is compounded into the resin composition of the invention, the compounding ratio is in the range of 0.01 to 2 weight parts, preferably in the range of 0.05 to 0.5 weight part per 100 weight parts in total of the polybutene-1 resin (A) and the polybutene-1 resin (B).

Further, it is also possible to compound a thermoplastic polymer other than a polybutene-1 resin in the resin composition of the invention in order to improve impact resistance or other physical properties. Examples of this thermoplastic polymer include olefinic elastomers such as ethylene-propylene copolymer resins, polyethylene, polypropylene, poly(4-methylpentene-1), polyisobutylene, etc. When such a thermoplastic polymer is compounded, its compounding ratio is 20 weight parts or less, preferably 15 weight parts or less per 100 weight parts in total of the polybutene-1 resin (A) and the polybutene-1 resin (B). Particularly, it is preferred to compound the olefinic elastomer for the improvement of impact resistance.

Further, in order to enhance the long-term durabilities such as heat aging resistance and chlorine water resistance of the molded articles obtained by molding the resin composition of the invention, the composition can contain various stabilizers, particularly an antioxidant.

Example of the antioxidant include phenolic and phosphorus series antioxidants such as, for example, 2,6-di-t-butyl-4-hydroxybenzoate, n-hexadecyl 3,5-di-t-butyl-4-hydroxybenzoate, 1,3,5-trimethyl-2,4,6-tris(3,5-di-t-butyl-4-hydroxybenzyl)benzene, 1,3,5-tris(4-t-butyl-3-hydroxy-2,6-dimethylphenyl) isocyanurate, tris(3,5-di-t-butyl-4-hydroxyphenyl) isocyanurate, n-octadecyl 3-(3,5-di-t-butyl-4-hydroxyphenyl)propionate, nickel salt of bis (3,5-d-t-butyl-4-hydroxybenzoylphosphonic acid) monoethyl ester, 2,2'-dihydroxy-3,3'-di( -methylcyclohexyl)-5,5'-dimethyl-diphenylmethane, 4,4-thio-bis(3-methyl-6-t-buthylphenol), 1,1,3-tris(2-methyl-4-hydroxy-5-t-butylphenyl) butane, tetrakis[methylene-3-(3,5-di-t-butyl-4-hydroxyphenyl)propionate] methane, 2,6-di-t-butyl-p-cresol, 4,4'-methylene-bis(2,6-di-t-butyl-phenol), tris(2,4-di-t-butyl-phenyl) phosphite and vitamin E. These are used alone or in a combination of two or more.

When the antioxidant is contained, the content is usually in the range of 0.1 to 2 weight parts, preferably in the range of 0.5 to 1.8 weight parts per 100 weight parts in total of the polybutene-1 resin (A) and the polybutene-1 resin (B).

The resin composition of the invention can further contain, if necessary, an ultraviolet absorber, a fungicide, a rust inhibitor, a lubricant, a filler, a pigment, a heat resistant stabilizer, and the like.

The resin composition of the invention can be prepared according to a method which comprises melt-mixing the polybutene-1 resin (A), the polybutene-1 resin (B) and if necessary the nucleating agent, the thermoplastic polymer and the like in the above compounding ratio using a Henschel mixer, V-blender, ribbon blender, tumbler blender or the like; or a method which comprises, after the above mixing, melt-kneading the mixture using a single-axial extruder, polyaxial extruder, banburg mixer, kneader or the like, and then granulating or pulverizing the kneaded matter. Further, the present composition can also be prepared by obtaining the polybutene-1 resins (A) and (B) separately by polymerization and directly mixing the obtained polymerization solutions by stirring.

It is preferred in view of molding and processing that the resin composition of the invention usually has a melt flow rate of 0.2 to 5 g/10 min, preferably 0.3 to 3 g/10 min.

Example

This invention is further specifically described below by examples and comparative examples.

In the following examples and comparative examples, the measurement of the heat resistance, tensile yield stress and impact strength of pressed sheet of the resin composition, and the evaluation of the internal pressure resistance of the resin composition and the moldability of a pipe were carried out according to methods described below.

Heat resistance

Heat resistance was measured according to JIS K 7206 (Vicut softening temperature test method for thermoplastic plastics). This Vicut softening temperature is a scale to denote the maximum usable temperature of a resin, and, in case of pipes for hot water supply and water supply, is preferably 100°C or more since they sometimes come in contact with hot water.

Tensile yield stress

This was measured according to ASTM D638 using ASTM Type IV dumbbells.

Impact strength

This was measured according to ASTM D256 at 0°C giving a notch.

Internal pressure resistance

Further, pipes having an inner diameter of 13 mm and an outer diameter of 17 mm were prepared with a pipe-molding apparatus (produced by Hitachi Zosen Sangyo Co., Ltd.) using the pellets of each of the polybutene-1 resin compositions, and evaluated for the internal pressure resistance and the moldability of the pipes according to the following methods.

A pipe was immersed in a constant temperature bath adjusted to 90 ± 1°C, 90°C water was introduced into the pipe and pressurized so that stress generated hoop stress of the pipe became 70 kg/cm$^2$, and the time before the pipe was broken was measured.

Moldability of pipes

Pipes were molded at a molding speed of 10 m/min, the inner and outer faces of the resulting pipes were observed with the naked eye and evaluated according to the following three criteria.
○    Moldability was good and the appearance of the pipe was good, too.
△    Pipe molding was somehow possible, but small uneven rough surfaces were formed on the inner and outer faces of the pipe.
X    Pipe molding was not possible.

Reference example A

⟨Preparation of a titanium catalyst component (A)⟩

4.76 g (50 mmol) of anhydrous magnesium chloride, 25 ml of decane and 23.4 ml (150 mmol) of 2-ethylhexyl alcohol were reacted with heating at 130°C for 2 hours to give a uniform solution, 1.11 g (7.5 mmol) of phthalic anhydride was added to this solution, and the mixture was mixed with stirring at 130°C for further one hour to dissolve phthalic anhydride in the uniform solution. The thus obtained uniform solution was cooled to room temperature and the whole solution was then added dropwise over a period of 1 hour to 200 ml (1.8 mol) of titanium tetrachloride held at -20°C. After the completion of addition, the temperature of the mixture was elevated to 110°C over a period of 4 hours, and at the time when 110°C was reached 268 ml (12.5 mmol) of diisobutyl phthalate was added and the mixture was held at that temperature for 2 hours under stirring. After completion of the two hours reaction, the solid part was collected by hot filtration, resuspended in 200 ml of TiCl$_4$ and then again subjected to reaction with heating at 110°C for 2 hours. After completion of the reaction, the solid part was collected again by hot filtration and sufficiently washed with decane and hexane each of 110°C until no free titanium compounds came to be detected in the washings. The titanium catalyst component (A) synthesized by the above preparation process was preserved as a slurry in hexane. Part of the slurry was dried for the purpose of investigating the catalytic composition. The composition of the thus obtained titanium catalyst component (A) was 3.1 wt % of titanium, 56.0 wt % of chloride, 17.0 wt % of magnesium and 20.9 wt % of diisobutyl phthalate.

⟨Polymerization⟩

Into 200-L SUS-made reactor were continuously fed 50 l/hr of hexane, 50 l/hr of liquid butene-1, 0.6 mM/hr of the above titanium catalyst component (A), 100 mM/hr of triisobutylaluminum, 5 mM/hr of cyclohexylmethyldimethoxysilane and hydrogen. The hydrogen was fed so that the mole ratio of hydrogen/butene-1 at the gaseous phase part of the reactor became 0.01. Polymerization temperature was maintained at 60°C and polymerization pressure was 4.7 bar. While the level of the polymerization apparatus was maintained at 100 L, the contents were continuously withdrawn. 1 L/hr of methanol was added to this polymerization solution, butene-1 was removed, the resulting liquid was heated to 280°C to remove the hexane by flashing, and the residue was pelletized at 250°C. The polymerization activity was 7600 g/mM.Ti. The resulting polybutene-1 resin is referred to as "PB-A".

Reference example B

Polymerization was carried out in the same manner as in Reference example A except that the mole ratio of hydrogen/butene-1 was changed to 0.5, whereby a polybutene-1 resin (referred to as "PB-B") was synthesized.

Reference example C

Polymerization was carried out in the same manner as in Reference example A except that 20 mM/hr of cyclohexylmethyldimethoxysilane was used and the ratio of hydrogen/butene-1 was changed to 0.006, whereby a polybutene-1 resin (referred to as "PB-C") was synthesized.

Reference example D

Polymerization was carried out in the same manner as in Reference example A except that 20 mM/hr of cyclohexylmethyldimethoxysilane was used and the mole ratio of hydrogen/butene-1 was changed to 1.5, whereby a polybutene-1 resin (referred to as "PB-D") was synthesized.

Reference example E

Into a 200-L SUS-made reactor were continuously fed 500 L/hr of hexane, 50 L/hr of liquid butene-1, 100 mM/hr of titanium trichloride (produced by Toho Titanium Co., Ltd., TAC-141), 100 mM/hr of diethylaluminum chloride, 100 mM/hr of diethylaluminum iodide and hydrogen. The hydrogen was fed so that the mole ratio of hydrogen/butene-1 at the gaseous phase part of the reactor became 0.04. Polymerization temperature was held at 60°C and polymerization pressure was 4.8 bar. The contents were continuously withdrawn while the level of the polymerization apparatus was maintained at 100 L. 1 L/hr of methanol was added to the polymerization solution, butene-1 was removed, 100 L/hr of water was added followed by stirring, water was separated, the residual liquid was heated to 280°C to remove hexane by flashing, and he residue was pelletized at 250°C. The polymerization activity was 63 g/mM/Ti. The resulting polybutene-1 resin was referred to as "PB-E".

Reference example F

Polymerization was carried out in the same manner as in Reference example A except that 1 mM/hr of cyclohexylmethyldimethoxysilane was used and the mole ratio of hydrogen/butene-1 was changed to 0.02, whereby a polybutene-1 resin (referred to as "PB-F") was synthesized.

Reference example G

Polymerization was carried out in the same manner as in Reference example A except that the mole ratio of hydrogen/butene-1 was changed to 0.02, whereby a polybutene-1 resin (referred to as "PB-G") was synthesized.

Examples 1 to 3

Antioxidants Irganox 1330, Irganox 1010 and Irganox 1076 were added, in the rates of 0.4 weight part, 0.3 weight part and 0.2 weight part respectively, to 100 weight part each of mixtures in the rates shown in Table 1 of a butene-1 homopolymer (PB-A) (MFR: 0.2 g/10 min (ASTM: D 1238, E), $\overline{M}w/\overline{M}n$ = 4.5, II = 95 %) and a butene-1 homopolymer (PB-B) (MFR: 20 g/10 min (ASTM: D 1238, E), $\overline{M}w/\overline{M}n$ = 4.5, II = 95 %). To each mixture were added 0.2 weight part of polyethylene as a nucleating agent, 0.05 weight part of an isoindolinone yellow organic pigment as a pigment and 0.2 weight part of titanium oxide. Then, each mixture was stirred and mixed with a Henschel mixer, and melted and kneaded using a 65 mmø extruder to prepare pellets of the polybutene-1 resin composition.

The resulting pellets were subjected to a heating press of a temperature of 200°C for 10 minutes to be melted, and pressurized for 5 minutes with a cooling press of about 30°C to prepare two kinds of pressed sheets having thicknesses of 2 mm and 3 mm respectively. These sheets were used as a sample and measured for heat resistance, tensile yield stress and impact strength according to the foregoing methods. Further, pipes were prepared and evaluated for internal pressure resistance and the moldability of the pipes. The results are shown in Table 1.

Example 4

Pellets of a polybutene-1 resin composition were prepared in the same manner as in Example 2 except for adding ethylenebisstearoamide (EBSA) as a nucleating agent. Pressed sheets were made of the pellets and measured for heat resistance, tensile yield stress and impact strength, and pipes were made of the pellet and evaluated for internal pressure resistance and the moldability of the pipes. The results are shown in Table 1.

Example 5

Pellets of a polybutene-1 resin composition were prepared in the same manner as in Example 2 except for adding no nucleating agent. Pressed sheets were made of the pellets and measured for heat resistance, tensile yield streess and impact strength, and pipes were made of the pellets and evaluated for internal pressure resistance and the moldability of the pipes. The results are shown in Table 1.

Examples 6 and 7

Pellets of a polybutene-1 resin composition were prepared in the same manner as in Example 2 except that a butene-1 homopolymer (PB-C) (MFR: 0.05/10 min, $\overline{M}w/\overline{M}n$ = 5, II = 97 %) and a butene-1 homopolymer (PB-D) (MFR: 100 g/10 min, $\overline{M}w/\overline{M}n$ = 5, II = 97 %) were compounded in the rate shown in Table 1. Pressed sheets were prepared from the pellets and measured for heat resistance, tensile yield stress and impact strength, and pipes were prepared from the pellets and evaluated for internal pressure resistance and the moldability of the pipes. The results are shown in Table 1.

Comparative example 1

A composition was prepared in the same manner as in Example 1 except for using no butene-1 homopolymer (PB-B). Likewise in Example 1, sheets were prepared and measured for heat resistance, tensile yield strength and impact strength, and pipes were prepared and evaluated for internal pressure resistance and the moldability of the pipes. The results are shown in Table 2. As is exhibited in Table 1, when pipe molding was carried out at 10 m/min, striking rough surfaces were formed on the inner and outer faces of the resulting pipe.

Comparative example 2

A composition was prepared in the same manner as in Example 1 except for using no butene-1 homopolymer (PB-A). Likewise in Example 1, sheets were prepared and measured for heat resistance, tensile yield strength and impact strength, and pipes were prepared and evaluated for internal pressure resistance and the moldability of the pipes. The results are shown in Table 2. The resulting sheets were poor in impact strength and as for pipe molding pipe molding was impossible because the viscosity of the molten parison was extremely small.

Comparative example 3

A composition was prepared in the same manner as in Example 1 except that a butene-1 homopolymer (PB-E) (MFR: 0.5 g/10 min, $\overline{M}w/\overline{M}n$ = 12, II = 95 %) was used in place of the butene-1 homopolymers (PB-A) and (PB-B). Sheets were prepared from the composition in the same manner as in Example 1 and measured for heat resistance, tensile yield stress and impact strength, and pipes were prepared from the composition and evaluated for internal pressure resistance and the moldability of the pipes. The results are shown in Table 2.

Comparative example 4

A composition was prepared in the same manner a in Example 1 except that a butene-1 homopolymer (PB-F) (MFR: 0.5 g/10 min, $\overline{M}w/\overline{M}n$ = 4.5, II = 90 %, was used in place of the butene-1 homopolymer (PB-A) and (PB-B). Sheets were prepared from the composition in the same manner as in Example 1 and measured for heat resistance, tensile yield stress and impact strength, and pipes were prepared from the composition and evaluated for internal pressure resistance and the moldability of the pipe. The results are shown in Table 2. The resulting sheets were low in tensile yield stress and in the internal pressure resistance test of the pipes, the pipes were burst under the stress of 75 kg/cm$^2$. Further, in pipe molding, striking rough surfaces were formed on the inner and outer faces of the resulting pipes.

Comparative example 5

A composition was prepared in the same manner a in Example 1 except that a butene-1 homopolymer (PB-G) (MFR: 0.5 g/10 min, $\overline{M}w/\overline{M}n$ = 4.5, II = 95 %, was used in place of the butene-1 homopolymers (PB-A) and (PB-B). Sheets were prepared from the composition in the same manner as in Example 1 and measured for heat resistance, tensile yield stress and impact strength, and pipes were prepared from the composition and evaluated for internal pressure resistance and the moldability of the pipe. The results are shown in Table 2.

Table 1

| | Resin | | Nucleat-ing agent weight part | Basic physical properties | | Sheet physical properties | | | Pipe physical property and moldability | |
|---|---|---|---|---|---|---|---|---|---|---|
| | weight % | weight % | | MFR (g/10 min) | Isotactic value (%) | Tensile yield stress (kg/cm$^2$) | Izod impact strength (kg cm/cm) | Vicut soften-ing point (°C) | Internal pressure resis-tance (hour) | Mold-ability and rough surface |
| | PB-A | PB-B | | | | | | | | |
| Example 1 | 90 | 10 | PE = 0.2 | 0.3 | 95 | 178 | 38 | 118 | 3500 | ◯ |
| Example 2 | 80 | 20 | PE = 0.2 | 0.5 | 95 | 179 | 42 | 118 | 2800 | ◯ |
| Example 3 | 70 | 30 | PE = 0.2 | 0.9 | 95 | 180 | 41 | 118 | 4100 | ◯ |
| | PB-A | PB-B | | | | | | | | |
| Example 4 | 80 | 20 | EBSA=0.05 | 0.5 | 95 | 188 | 33 | 122 | 5000 more than | ◯ |
| Example 5 | 80 | 20 | − | 0.5 | 95 | 174 | 59 | 115 | 2100 | ◯ |
| | PB-C | PB-D | | | | | | | | |
| Example 6 | 80 | 20 | PE = 0.2 | 0.2 | 97 | 191 | 35 | 123 | 5000 more than | ◯ |
| Example 7 | 70 | 30 | PE = 0.2 | 0.5 | 97 | 193 | 33 | 123 | 5000 more than | ◯ |

Table 2

| | Resin | | Basic physical properties | | | Sheet physical properties | | | Pipe physical property and moldability | |
|---|---|---|---|---|---|---|---|---|---|---|
| | Poly-butane weight % | Nucleat-ing agent weight part | Mw/Mn | MFR (g/10 min) | Isotactic value (%) | Tensile yield stress (kg/cm2) | Izod impact strength (kg cm/cm) | Vicut soften-ing point (°C) | Internal pressure resis-tance (hour) | Mold-ability and rough surface |
| Comparative example 1 | PB-A=100 | PE=0.2 | 4.5 | 0.2 | 95 | 176 | 62 | 116 | 2400 | △ |
| Comparative example 2 | PB-B=100 | PE=0.2 | 4.5 | 20 | 95 | 183 | 17 | 121 | Molding was im-possible | × |
| Comparative example 3 | PB-E=100 | PE=0.2 | 12 | 0.5 | 95 | 173 | 8 | 117 | 2300 | ○ |
| Comparative example 4 | PB-F=100 | - | 4.5 | 0.5 | 90 | 133 | no break | 95 | 0 | △ |
| Comparative example 5 | PB-G=100 | - | 4.5 | 0.5 | 95 | 178 | 57 | 117 | 2600 | △ |

### Effect of the Invention

The resin composition of this invention is a polybutene-1 resin composition which has characteristics such as excellent rigidity, creep characteristic and impact resistant strength, which a polybutene-1 resin inherently posesses, and is excellent in moldability, particularly moldability in high molding speed, so-called high speed moldability. Therefore, a pipe molded from the resin composition of the invention is a pipe suitable for a piping material for hot water supply and water supply.

**Claims**

1. A polybutene-1 resin composition substantially comprising:
   (A) 60 to 95 weight parts of a polybutene-1 resin (A) optionally including up to 20 mole % of a copolymerizable α-olefin having 2-20 carbon atoms, the resin (A) having
      (i) a melt flow rate (ASTM D 1238, E) of 0.01 to 5 g/10 min,
      (ii) a ratio (Mw/Mn) of weight average molecular weight (Mw) to number average molecular weight (Mn) of 6 or less, and
      (iii) an isotactic value of 93% or more, and
   (B) 40 to 5 weight parts of polybutene-1 resin (B) optionally including up to 20 mole % of a copolymerizable α-olefin having 2-20 carbon atoms, the resin (B) having
      (I) a 20 times or more as large melt flow rate as that of the polybutene-1 resin (A),
      (ii) a ratio (Mw/Mn) of weight average molecular weight (Mw) to number average molecular weight (Mn) of 6 or less, and
      (iii) an isotactic value of 93% or more;
   the isotactic value of the resins (A) and (B) being measured by dissolving 1 gram of the resin in 100 ml of n-decane, cooling the solution to 0°C, leaving the solution to stand at 0°C for 24 hours, and measuring the weight % of the insoluble part to the whole resin which corresponds to the isotactic value.

2. The resin composition of claim 1 substantially comprising 70 to 90 weight parts of the polybutene-1 resin (A) and 30 to 10 weight parts of the polybutene-1 resin (B)

3. The resin composition of claim 1 wherein the polybutene-1 resin (A) has a melt flow index of 0.1 to 2 g/10 min.

4. The resin composition of claim 1 wherein the polybutene-1 resin (A) has the $\overline{M}w/\overline{M}n$ ratio of 5 or less.

5. The resin composition of claim 1 wherein the polybutene-1 resin (A) has an isotactic value of 93 to 98 %.

6. The resin composition of claim 1 wherein the polybutene-1 resin (B) has a 50 to 1,000 times as large melt flow rate as that of the polybutene-1 resin (A).

7. The resin composition of claim 1 wherein the polybutene-1 resin (B) has the $\overline{M}w/\overline{M}n$ ratio of 5 or less.

8. The resin composition of claim 1 wherein the polybutene-1 resin (B) has an isotactic value of 93 to 98 %,

9. A resin composition substantially comprising
   (1) 100 weight parts of the resin composition of claim 1,
   (2) 0.01 to 2 weight parts of a nucleating agent, and
   (3) 0 to 20 weight parts of a thermoplastic polymer other than a polybutene-1 resin.

10. A molding molded from the resin composition of claim 9.

11. A pipe molded from the resin composition of claim 9.

12. A process for preparing a polybutene-1 resin molding which comprises melt-mixing
    (a) 60 to 95 weight parts of the polybutene-1 resin (A) of claim 1,
    (b) 40 to 5 weight parts of the polybutene-1 resin (B) of claim 1,
    (c) 0.01 to 2 weight parts of a nucleating agent per 100 weight parts in total of the polybutene-1 resin (A) and the polybutene-1 resin (B), and
    (d) 0 to 20 weight parts of a thermoplastic polymer other than a polybutene-1 resin per 100 weight parts in total of the polybutene-1 resin (A) and the polybutene-1 resin (B),

12

and molding the mixture into the molding.

13. The preparation process of claim 12 wherein the molding is a pipe.

**Patentansprüche**

1. Polybuten-1-Harzzusammensetzung, im wesentlichen bestehend aus:
   (A) 60 bis 95 Gewichtsteilen eines Polybuten-1-Harzes (A), das fakultativ bis zu 20 Mol% eines copolymerisierbaren α-Olefins mit 2 - 20 Kohlenstoffatomen einschließt, wobei das Harz (A)
   (i) eine Schmelz-Fließgeschwindigkeit (ASTM D 1238, E) von 0,01 bis 5 g/10 Min.,
   (ii) ein Verhältnis ($\overline{M}w/\overline{M}n$) des Molekulargewichts nach dem Gewichtsmittel ($\overline{M}w$) zu dem Molekulargewicht nach dem Zahlenmittel ($\overline{M}n$) von 6 oder weniger, und
   (iii) einen isotaktischen Wert von 93 % oder mehr hat, und
   (B) 40 bis 5 Gewichtsteilen eines Polybuten-1-Harzes (B), das fakultativ bis zu 20 Mol% eines copolymerisierbaren α-Olefins mit 2 - 20 Kohlenstoffatomen einschließt, wobei das Harz (B)
   (i) eine 20mal oder mehr so große Schmelz-Fließgeschwindigkeit wie die des Polybuten-1-Harzes (A),
   (ii) ein Verhältnis ($\overline{M}w/\overline{M}n$) des Molekulargewichts nach dem Gewichtsmittel ($\overline{M}w$) zu dem Molekulargewicht nach dem Zahlenmittel ($\overline{M}n$) von 6 oder weniger, und
   (iii) einen isotaktischen Wert von 93 % oder mehr hat;
   der isotaktische Wert der Harze (A) und (B) gemessen wird, indem 1 Gramm des Harzes in 100 ml n-Dekan gelöst wird, die Lösung auf 0 °C abgekühlt wird, die Lösung 24 Stunden lang bei 0 °C stehen gelassen wird und die Gewichts% des unlöslichen Anteils im Verhältnis zum Gesamtharz gemessen werden, welches dem isotaktischen Wert entspricht.

2. Harzzusammensetzung nach Anspruch 1, dadurch gekennzeichnet, daß sie im wesentlichen 70 bis 90 Gewichtsteile des Polybuten-1-Harzes (A) und 30 bis 10 Gewichtsteile des Polybuten-1-Harzes (B) enthält.

3. Harzzusammensetzung nach Anspruch 1, dadurch gekennzeichnet, daß das Polybuten-1-Harz einen Schmelzflußindex von 0,1 bis 2 g/10 Min. hat.

4. Harzzusammensetzung nach Anspruch 1, dadurch gekennzeichnet, daß das Polybuten-1-Harz (A) das $\overline{M}w/\overline{M}n$ Verhältnis von 5 oder weniger hat.

5. Harzzusammensetzung nach Anspruch 1, dadurch gekennzeichnet, daß das Polybuten-1-Harz (A) einen isotaktischen Wert von 93 bis 98 % hat.

6. Harzzusammensetzung nach Anspruch 1, dadurch gekennzeichnet, daß das Polybuten-1-Harz (B) eine 50 bis 1000mal so große Schmelz-Fließgeschwindigkeit wie jene des Polybuten-1-Harzes (A) hat.

7. Harzzusammensetzung nach Anspruch 1, dadurch gekennzeichnet, daß das Polybuten-1-Harz (B) das $\overline{M}w/\overline{M}n$ Verhältnis von 5 oder weniger hat.

8. Harzzusammensetzung nach Anspruch 1, dadurch gekennzeichnet, daß das Polybuten-1-Harz (B) einen isotaktischen Wert von 93 bis 98 % hat.

9. Harzzusammensetzung, im wesentlichen bestehend aus:
   (1) 100 Gewichtsteilen der Harzzusammensetzung nach Anspruch 1,
   (2) 0,01 bis 2 Gewichtsteilen eines keimbildenden Mittels, und
   (3) 0 bis 20 Gewichtsteilen eines thermoplastischen Polymeren anders als Polybuten-1-Harz.

10. Preßling, geformt aus der Harzzusammensetzung nach Anspruch 9.

11. Rohr, geformt aus der Harzzusammensetzung nach Anspruch 9.

12. Verfahren zur Herstellung eines Polybuten-1-Harzpreßlings, welches Schmelzmischen von
    (a) 60 bis 95 Gewichtsteilen des Polybuten-1-Harzes (A) nach Anspruch 1,

(b) 40 bis 5 Gewichtsteilen des Polybuten-1-Harzes (B) nach Anspruch 1,

(c) 0,01 bis 2 Gewichtsteilen eines keimbildenden Mittels auf 100 Gewichtsteile des Polybuten-1-Harzes (A) und des Polybuten-1-Harzes (B) insgesamt, und

(d) 0 bis 20 Gewichtsteilen eines thermoplastischen Polymeren anders als ein Polybuten-1-Harz auf 100 Gewichtsteile des Polybuten-1-Harzes (A) und des Polybuten-1-Harzes (B) insgesamt, umfaßt und Formen der Mischung zu dem Preßling.

**13.** Herstellungsverfahren nach Anspruch 12, dadurch gekennzeichnet, daß der Preßling ein Rohr ist.

**Revendications**

**1.** Composition de résine de polybutène-1 comprenant essentiellement :

(A) 60 à 95 parties en poids d'une résine de polybutène-1 (A) pouvant facultativement contenir jusqu'à 20 % en moles d'une α-oléfine copolymérisable ayant 2 à 20 atomes de carbone, la résine (A) ayant

(i) un débit d'écoulement par fusion (ASTM D 1238, E) de 0,01 à 5 g/10 min,

(ii) un rapport (Mw/Mn) de la masse moléculaire moyenne en poids (Mw) à la masse moléculaire moyenne en nombre (Mn) de 6 ou moins, et

(iii) une valeur isotactique de 93 % ou plus, et

(B) 40 à 5 parties en poids de résine de polybutène-1 (B) comprenant facultativement jusqu'à 20 % en moles d'une α-oléfine copolymérisable ayant de 2 à 20 atomes de carbone, la résine (B) ayant

(i) un débit d'écoulement par fusion égal à 20 fois ou plus celui de la résine de polybutène-1 (A),

(ii) un rapport (Mw/Mn) de la masse moléculaire moyenne en poids (Mw) à la masse moléculaire moyenne en nombre (Mn) de 6 ou moins, et

(iii) une valeur isotactique de 93 % ou plus,

la valeur isotactique des résines (A) et (B) étant mesurée en dissolvant 1 gramme de la résine dans 100 ml de n-décane, en refroidissant la solution à 0°C, en laissant la solution reposer à 0°C pendant 24 heures, et en mesurant le pourcentage en poids de la partie insoluble de la résine totale qui correspond à la valeur isotactique.

**2.** Composition de résine selon la revendication 1, comprenant essentiellement 70 à 90 parties en poids de la résine de polybutène-1 (A) et 30 à 10 parties en poids de la résine de polybutène-1 (B).

**3.** Composition de résine selon la revendication 1, dans laquelle la résine de polybutène-1 (A) présente un indice de fusion de 0,1 à 2 g/10 min.

**4.** Composition de résine selon la revendication 1, dans laquelle la résine de polybutène-1 (A) a un rapport Mw/Mn de 5 ou moins.

**5.** Composition de résine selon la revendication 1, dans laquelle la résine de polybutène-1 (A) présente une valeur isotactique de 93 à 98 %.

**6.** Composition de résine selon la revendication 1, dans laquelle la résine de polybutène-1 (B) présente un indice de fusion égal à 50 à 1 000 fois celui de la résine de polybutène-1 (A).

**7.** Composition de résine selon la revendication 1, dans laquelle la résine de polybutène-1 (B) présente un rapport Mw/Mn de 5 ou moins.

**8.** Composition de résine selon la revendication 1, dans laquelle la résine de polybutène-1 (B) présente une valeur isotactique de 93 à 98 %.

**9.** Composition de résine comprenant essentiellement

(1) 100 parties en poids de la composition de résine de la revendication 1,

(2) 0,01 à 2 parties en poids d'un agent de nucléation, et

(3) 0 à 20 parties en poids d'un polymère thermoplastique autre qu'une résine de polybutène-1.

**10.** Produit moulé, moulé à partir de la composition de résine selon la revendication 9.

14

**11.** Canalisation moulée à partir d'une composition de résine selon la revendication 9.

**12.** Procédé de préparation d'un produit moulé en résine de polybutène-1, qui comprend les étapes consistant à mélanger à l'état fondu

(a) 60 à 95 parties en poids de la résine de polybutène-1 (A) selon la revendication 1,

(b) 40 à 5 parties en poids de la résine de polybutène-1 (B) selon la revendication 1,

(c) 0,01 à 2 parties en poids d'un agent de nucléation pour 100 parties en poids de l'ensemble de la résine de polybutène-1 (A) et de la résine de polybutène-1 (B), et

(d) 0 à 20 parties en poids d'un polymère thermoplastique autre qu'une résine de polybutène-1 pour 100 parties en poids de l'ensemble de la résine de polybutène-1 (A) et de la résine de polybutène-1 (B),

et à mouler le mélange pour former le produit moulé.

**13.** Procédé de préparation selon la revendication 12 dans lequel le produit moulé est une canalisation.